# EUROPEAN PATENT SPECIFICATION

(11) **EP 1 967 445 B1**
(45) Date of publication and mention of the grant of the patent: **11.11.2009**
(21) Application number: 07103518.2
(22) Date of filing: 05.03.2007
(51) Int. Cl.: B62D 27/02, B62D 25/14, B62D 21/02, B62D 21/11

(54) **Tolerance-absorbing mounting fixture and method**
Toleranzabsorbierende Montagevorrichtung und Montageverfahren dafür
Dispositif et procédé de fixation absorbant les tolérances

(43) Date of publication of application: 10.09.2008
(73) Proprietor: Ford Global Technologies, LLC, Dearborn MI 48126 (US)
(72) Inventor: Jonsson, Tony, 1632 Riaz (CH)
(74) Representative: Valea AB

(56) References cited:
- DE-A1- 3 718 841
- DE-A1-102005 021 661
- US-A1- 2004 190 982
- US-B1- 6 431 602

## Description

### TECHNICAL FIELD

The present invention concerns a tolerance-absorbing mounting fixture for mounting a first component of a vehicle on a second component of a vehicle. The present invention also concerns a method for mounting a first component of a vehicle on a second component of a vehicle.

### BACKGROUND OF THE INVENTION

Mounting fixtures for connecting a first component of a vehicle on a second component of a vehicle are well known in the art. In series production, such as the assembly of vehicles, it is common to use pre-fabricated standardized mounting fixtures and components. However, during production, even when using such standardized mounting fixtures and components, problems with tolerance deviations are often encountered. When a first component is mounted on a second component and the mounting fixture is either too long or too short this might lead to added stress and strain in some parts of the resulting structure, which can adversely affect properties, such as the fatigue life and the shock impact resistance thereof.

In vehicles, such as passenger cars, the cockpit zone is the most assembly-intensive area of the vehicle body due to the large variety of components and controls that are concentrated within a limited amount of space. Several conventional mounting fixtures require a bolt to be driven through a vehicle body component, such as an A-pillar, which often requires a large (up to 250 mm long) and consequently heavy and expensive bolt. The part of the bolt which protrudes out of the vehicle component can furthermore hinder or prevent other components from being mounted in the vicinity of that protruding part of the bolt, which consequently limits a vehicle manufacturer's design options.

US patent no. 6 431 602 in accordance with the preamble features of claim 1, discloses a coupling apparatus for spanning a gap between a first structure and a second structure and fixedly coupling the first and second structures together. The coupling apparatus includes first and second coupling structures, an attachment member and a coupling member. The first coupling structure has an internally threaded cavity and is fixedly coupled to the first structure. The second coupling structure has an externally threaded body and an abutting flange. The externally threaded body threadably engages the internally threaded cavity, permitting the first and second coupling structures to cooperate to span the gap between the first and second structures such that the abutting flange abuts the second structure. The attachment member includes a threaded portion which extends through the first and second coupling structures and threadably engages the coupling member.; The attachment member and the coupling member cooperate to generate a clamping force which is transmitted between the first structure, the first and second coupling structures and the second structure to thereby fixedly couple the first and second structures together.

US patent application publication no. US 2004/0190982 discloses a coupling arrangement for enabling fixing of a body structure member and a structure member. The coupling arrangement comprises at least two threaded tubes provided one in either end portion of a passage through a housing. The housing is fixedly attachable in relation to said structure members and has a threaded passage, wherein a threaded bolt is arranged through said passage. The threaded bolt is adapted to connect said body structure member and said structure member in a coupling position, from which coupling position said threaded bolt, via inserts, enables adjusting operation of said threaded tubes in opposite directions along said threaded bolt. Thus, the threaded tubes are adjustable to a respective fixed position by screwing the threaded bolt. Such a coupling arrangement is however quite complex and thus difficult and time consuming to manufacture.

### SUMMARY OF THE INVENTION

The object of the present invention is to provide an improved mounting fixture for mounting a first component of a vehicle on a second component of a vehicle.

This object is achieved by a tolerance-absorbing mounting fixture according to claim 1 which comprises a mounting plate having a contact surface comprising at least one projection of any shape and cross-section, which is arranged to be attached to a first component by welding, fasteners, adhesive joining or in any other suitable manner. The mounting fixture also comprises a bracket having a contact surface which is arranged be attached to a second component by welding, fasteners, adhesive joining or in any other suitable manner. The mounting fixture further comprises fastening means to hold the contact surface of the bracket against the contact surface of the mounting plate. The at least one projection of the contact surface of the mounting plate is arranged to become at least partly embedded in the contact surface of the bracket. The range of variation permitted in maintaining specified dimensions in machining the components and the mounting fixture is thereby absorbed by the mounting fixture. The mounting fixture according to the present invention therefore not only simplifies and facilitates the assembly of a vehicle but also results in a rigid, robust and reliable vehicle body structure.

The expression "bracket" is intended to mean any member that projects from a component of a vehicle, which is for example designed to support a vertical load. The expression "mounting plate" is not limited to a mounting member constituted by a flat thin piece of material but is intended to mean any mounting member of any shape and cross-section.

According to an embodiment of the invention the at least one projection of the contact surface of the mounting plate is arranged to become at least partly embedded in the contact surface of the bracket either as the mounting plate and bracket are brought together, i.e. a force is applied to push the mounting plate and the bracket together and this force causes the at least one projection of the contact surface of the mounting plate to become at least partly embedded in the contact surface of the bracket, or as the mounting plate and bracket are being fastened to each other, i.e. the fastening means is arranged to urge the contact surfaces of the mounting plate and the bracket closer together as the fastening means is tightened or both as the mounting plate and bracket are brought together and fastened to each other.

According to an embodiment of the invention the contact surface of the mounting plate comprises a plurality of regularly or irregularly spaced projections.

According to an embodiment of the invention the contact surface of the bracket is substantially flat. The corresponding contact surfaces of the bracket and the mounting plate may be located perpendicularly, horizontally or at an angle to the longitudinal direction of the vehicle.

According to another embodiment of the invention the length of the at least one projection is up to 15 mm, preferably in the range of 1-10 mm. The length depending on the expected range of variation in maintaining specified dimensions in machining the first and second components and the mounting fixture.

According to a further embodiment of the invention the bracket comprises a cavity that is arranged to receive a guiding member on the mounting plate, whereby said guiding member may be one of the projections that is arranged to become at least partly embedded in the contact surface of the bracket or it may be a separate feature, located anywhere on the bracket, intended only to facilitate the positioning and alignment of vehicle components. According to an embodiment of the invention the mounting plate comprises a cavity that is arranged to receive a guiding member on the bracket.

According to an embodiment of the invention the at least one projection comprises a material having Rockwell hardness greater than the material comprises in the contact surface of the bracket.

The Rockwell hardness scale characterizes the indentation hardness of materials through the depth of penetration of an indenter, loaded on a material sample and compared to the penetration in some reference material. The depth of penetration is converted to a scale in which the harder the material the higher the number. The HRB and HRC scales express hardness as an arbitrary dimensionless number. The B-scale is used for softer materials and it employs a hardened steel ball as the indenter and a 100kg weight to obtain a value expressed as "HRB". The C-scale, for harder materials, uses a diamond cone and a 150kg weight to obtain a value expressed as "HRC".

According to an embodiment of the invention the at least one projection comprises a material having a Rockwell Hardness equal to or greater than 100HRB, such as a material having a C-scale Rockwell hardness ,such as cemented carbide or steel and the contact surface of the bracket comprises a material having a Rockwell hardness less than 100HRB, such aluminium, magnesium, an annealed copper alloy, brass or plastic.

According to a further embodiment of the invention the fastening means comprises at least one bolt, rivet or threaded screw. The mounting fixture provides both rotational and load bearing support for the first and second components while resisting transition movement, thereby reducing or eliminating component vibration and rattling. Assembly of the vehicle components may for example be facilitated by arranging the fastening means of one or a plurality of mounting fixtures of a vehicle to extend in substantially the same direction, such as in the longitudinal direction of the vehicle so that the fastening means may be inserted from one side of the vehicle. This facilitates assembly of a vehicle as well as maintenance and repair work since access to said fastening means is facilitated.

According to an embodiment of the invention the first component is a vehicle pillar such as an A-pillar, B-pillar, C-pillar etc. and the second component is part of a vehicle body, or vice versa. The first and/or second component may be a structural member such as a beam or profile or any other component in a vehicle, such as part of an air conditioning system, steering system, motor, or radio system.

The present invention also concerns a method for mounting a fist component of a vehicle on a second component of a vehicle. The method comprises the steps of attaching a mounting plate having a contact surface comprising at least one projection to a first component of a vehicle and attaching a bracket having a corresponding contact surface to a second component of a vehicle. The contact surface of the mounting plate and the contact surface of the bracket are brought together and the mounting plate is fastened to the bracket whereby the at least one projection of the contact surface of the mounting plate becomes at least partly embedded in the contact surface of the bracket either as the mounting plate and bracket are brought together or as they are fastened to each other or both during their bringing together and fastening.

According to an embodiment of the invention the contact surface of the bracket is substantially flat.

According to an embodiment of the invention the contact surface of the mounting plate comprises a plurality of regularly or irregularly spaced projections.

According to another embodiment of the invention the length of the at least one projection is up to 15 mm, preferably in the range of 1-10 mm.

According to a further embodiment of the invention the bracket comprises at least one cavity that receives at least one projection on the mounting plate whereby the method comprises the step of aligning the at least one projection on the mounting plate with the at least one cavity on the bracket. According to a further embodiment of the invention the mounting plate comprises at least one cavity that receives at least one projection on the bracket whereby the method comprises the step of aligning the at least one projection on the bracket with the at least one cavity on the mounting plate.

According to an embodiment of the invention the at least one projection comprises a material having Rockwell hardness greater than the material comprised in the contact surface of the bracket.

According to an embodiment of the invention the at least one projection comprises a material having a Rockwell Hardness equal to or greater than 100HRB, such as cemented carbide, steel or any other material harder than HRB and the contact surface of the bracket comprises a material having a Rockwell Hardness less than 100HRB, such aluminium, magnesium, an annealed copper alloy, brass or plastic.

According to a further embodiment of the invention the method comprises the step fastening the mounting plate to the bracket by means of a bolt, rivet or threaded screw.

According to an embodiment of the invention the first component is a vehicle pillar such as an A-pillar, B-pillar, C-pillar etc and the second component is part of a vehicle body, or vice versa.

The present invention also concerns a vehicle, such as a passenger car, a heavy goods vehicle, truck or bus, comprising at least one tolerance-absorbing mounting fixture according to any of the embodiments of the invention.

### BRIEF DESCRIPTION OF THE DRAWINGS

The present invention will hereinafter be further explained by means of non-limiting examples with reference to the appended figures where;
- Figure 1: schematically shows a vehicle according to an embodiment of the invention,
- Figure 2: schematically shows a mounting fixture according to an embodiment of the invention prior to fastening a bracket and a mounting plate together, and
- Figure 3: schematically shows a mounting fixture according to an embodiment of the invention after fastening a bracket and a mounting plate together.

It should be noted that the drawings have not been drawn to scale and that the dimensions of certain features have been exaggerated for the sake of clarity.

### DETAILED DESCRIPTION OF EMBODIMENTS

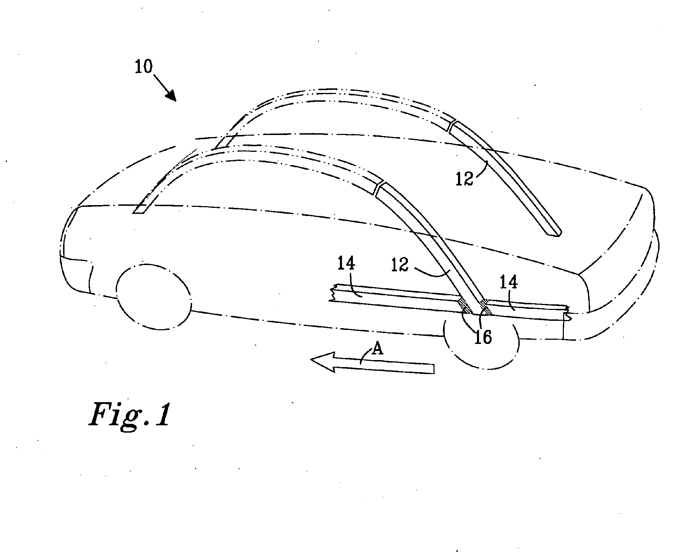

Figure 1 shows a vehicle 10 comprising an A-pillar 12. An end of the A-pillar 12 is mounted on part of the vehicle body, such as the lower tube 14 of the cockpit structure of the vehicle by means of a tolerance absorbing mounting fixture 16 according to an embodiment of the invention. The mounting fixture 16 may be used to fixedly attach any two or more components of a vehicle to one another irrespective of their position relative to one other.

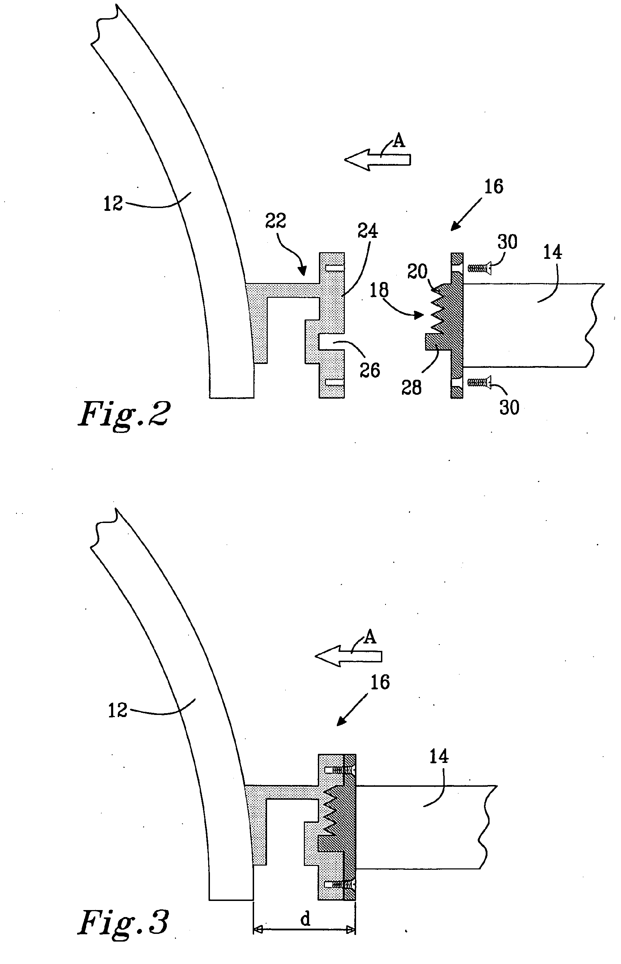

Figure 2 shows a tolerance-absorbing mounting fixture 16 for mounting an A-pillar 12 on part of a vehicle body, such as the lower tube 14 of the cockpit structure. The mounting fixture 16 comprises a mounting plate 18 having a toothed contact surface comprising four regularly spaced teeth 20 that are 2 mm in length. The mounting plate 18 is arranged to be attached to the lower tube 14 of the cockpit structure, by welding for example. The teeth 20 need not of course be of the same height or the same shape or cross section as shown in the illustrated embodiment.

The mounting fixture 16 also comprises a bracket 22 that is arranged be attached to the A-pillar 12 of a vehicle. The bracket 22 comprising a substantially flat outer surface 24, having an area of approximately 10 to 100 cm². The teeth 20 of the contact surface of the mounting plat 18e comprise a material having a C-scale Rockwell Hardness, such as cemented carbide, steel, such as steel 1311, or any other material harder than HRB and the substantially flat outer surface 24 of the bracket 22 comprises a material having a B-scale Rockwell Hardness (HRB), such aluminium, such as aluminium alloy Al 4005, magnesium, an annealed copper alloy, brass or plastic.

The bracket 22 also comprises a cavity 26 that is arranged to receive a guiding member 28 located on the mounting plate 18, which centres the A-pillar 12 laterally as it is being moved forward into its final position, thereby facilitating alignment of the A-pillar 12 with the lower tube 14.

In order to mount the A-pillar 12 on the lower tube 14, the guiding member 28 is aligned with the cavity 26 on the bracket 22, the A-pillar 12 is pushed against the lower tube 14 so that the substantially flat surface 24 of the bracket 22 is brought into contact with the teeth 20 of the contact surface of the mounting plate 18. If a sufficiently large force is applied to push the A-pillar 12 against the lower tube 14 during this step, the teeth 20 of the contact surface of the mounting plate 18 may become at least partly embedded in the substantially flat surface 24 of the bracket 22 as the mounting plate 18 and bracket 22 are pushed together. Said at least partial embedding of the teeth 20 may however continue, or be initiated during the fastening of the mounting plate 18 to the bracket 22. The depth to which the teeth 20 become embedded in the substantially flat surface 24 of the bracket 22 depends on the desired distance, d, that is to be achieved between the A-pillar 12 and the lower tube 14 to ensure that the A-pillar 12 becomes precisely positioned with respect to the lower tube 14.

Figure 3 shows the mounting fixture 16 illustrated in figure 2 after the bracket 22 has been fastened to the mounting plate 18 by means of a mechanical fastener such as a M10 or M12 threaded bolt 30 and nut (not shown) with a clamp load of 30-200 kN. The threaded bolt 30 preferably extends in the same direction in which the contact surfaces of the mounting plate 18 and bracket are brought into contact with the each other, i.e. in the longitudinal direction, A, of the vehicle. The threaded bolt 30 is preferably installed from the outside of the vehicle 10, which results in a minimum of uncomfortable working positions for a mechanic assembling the vehicle or which reduces the complexity in assembling a vehicle for a robot. According to an embodiment of the invention, the mounting plate 18 and the bracket 22 may be provided with at least one pre-drilled (threaded) hole in a flange to accommodate at least one (threaded) bolt 30.

By using the mounting fixture 16 according to the invention the distance between two components 12 and 14 which are to be mounted at a predetermined distance can be adjusted so that the two components 12 and 14 are mounted at the desired distance, d, apart. Any variations in the specified dimensions of the components 12 and 14 and the mounting fixture 16 which occur during the manufacture of the components and the mounting fixture are thereby absorbed by the mounting fixture 16 since the teeth 20 may be embedded more deeply in the substantially flat surface of the bracket 22 until the desired distance, d, between the components 12 and 14 is obtained.

Further modifications of the invention within the scope of the claims would be apparent to a skilled person. It should for example be noted that the mounting fixture of the present invention may comprise a bracket comprising a plurality of contact surfaces that are arranged to mate with the contact surfaces of a plurality of mounting plates attached to different components of a vehicle or to different parts of the same component of a vehicle.

## Claims

1. Tolerance-absorbing mounting fixture (16) for mounting a first component (12) of a vehicle (10) on a second component (14) of a vehicle, whereby the mounting fixture (16) comprises
• a mounting plate (18) having a contact surface comprising at least one projection (20), which is arranged to be attached to a first component (14);
• a bracket (22) comprising a corresponding contact surface (24) which is arranged be attached to a second component (12), and
• fastening means (30) to hold the contact surface (24) of the bracket (22) against the contact surface of the mounting plate (18), **characterized in that** said at least one projection (20) of the contact surface of the mounting plate (18) is arranged to become at least partly embedded in the contact surface (24) of the bracket (22).

2. Tolerance-absorbing mounting fixture (16) according to claim 1, **characterized in that** said at least one projection (20) of the contact surface of the mounting plate (18) is arranged to become at least partly embedded in the contact surface (24) of the bracket (22) as the mounting plate (18) and bracket (22) are brought together and/or as the mounting plate (18) and bracket (22) are fastened to one another.

3. Tolerance-absorbing mounting fixture (16) according to claim 1 or 2, **characterized in that** the contact surface (24) of the bracket (22) is substantially flat.

4. Tolerance-absorbing mounting fixture (16) according to any of the preceding claims, **characterized in that** the contact surface of the mounting plate (18) comprises a plurality of regularly or irregularly spaced projections (20).

5. Tolerance-absorbing mounting fixture (16) according to any of the preceding claims, **characterized in that** the length of said at least one projection (20) is up to 15 mm, preferably in the range of 1-10 mm.

6. Tolerance-absorbing mounting fixture (16) according to any of the preceding claims, **characterized in that** the bracket (22) comprises at least one cavity (26) that is arranged to receive a guiding member (28) on the mounting plate (18).

7. Tolerance-absorbing mounting fixture (16) according to any of the preceding claims, **characterized in that** the mounting plate (18) comprises at least one cavity (26) that is arranged to receive a guiding member (28) on the bracket (22).

8. Tolerance-absorbing mounting fixture (16) according to any of the preceding claims, **characterized in that** said at least one projection (20) comprises a material having Rockwell hardness greater than the material comprised in the contact surface (24) of the bracket (22).

9. Tolerance-absorbing mounting fixture (16) according to any of the preceding claims, **characterized in that** said at least one projection (20) comprises a material having Rockwell Hardness equal to or greater than 100HRB, such as cemented carbide, steel or any other material harder than HRB.

10. Tolerance-absorbing mounting fixture (16) according to claim 8, **characterized in that** said contact surface (24) of the bracket (22) comprises a material having a B-scale Rockwell hardness less than 100HRB, such aluminium, magnesium, an annealed copper alloy, brass or plastic.

11. Tolerance-absorbing mounting fixture (16) according to any of the preceding claims, **characterized in that** said fastening means (30) comprises a bolt, rivet or threaded screw.

12. Tolerance-absorbing mounting fixture (16) according to any of the preceding claims, **characterized in that** said first component is a vehicle pillar such as an A-pillar, B-pillar, C-pillar etc. and the second component is part of a vehicle body, or vice versa.

13. Method for mounting a fist component (14) of a vehicle on a second component (12) of a vehicle, **characterized in that** it comprises the steps of
• attaching a mounting plate (18) having a contact surface comprising at least one projection (20) to a first component (14) of a vehicle;
• attaching a bracket (22) having a corresponding contact surface (24) to a second component (12) of a vehicle,
• bringing the contact surface of the mounting plate (18) and the contact surface (24) of the bracket (22) together, and
• fastening the mounting plate (18) to the bracket (22),
whereby said at least one projection (20) of the contact surface of the mounting plate (18) becomes at least partly embedded in the contact surface (24) of the bracket (22).

14. Method according to claim 13, **characterized in that** it comprises the step of pushing the mounting plate (18) and the bracket (22) together so that said at least one projection (20) of the contact surface of the mounting plate (18) becomes at least partly embedded in the contact surface (24) of the bracket (22).

15. Method according to claim 13 or 14, **characterized in that** the contact surface (24) of the bracket (22) is substantially flat.

16. Method according to any of claims 13-15, **characterized in that** said contact surface of the mounting plate (18) comprises a plurality of regularly or irregularly spaced projections (20).

17. Method according to any of claims 13-16, **characterized in that** the length of said at least one projection (20) is up to 15 mm, preferably in the range of 1-10 mm.

18. Method according to any of claims 13-17, **characterized in that** said bracket (22) comprises at least one cavity (26) that is arranged to receive a guiding member (28) on the mounting plate (18), whereby the method comprises the step of aligning the guiding member (28) on the mounting plate (18) with the cavity (26) on the bracket (22).

19. Method according to any of claims 13-18, **characterized in that** the mounting plate (18) comprises a cavity (26) that is arranged to receive a guiding member (28) on the bracket (22), whereby the method comprises the step of aligning said guiding member (28) on the bracket (22) with said cavity (26) on the mounting plate (18).

20. Method according to any of claims 13-19, **characterized in that** said at least one projection (20) comprises a material having Rockwell hardness greater than the material comprised in the contact surface (24) of the bracket (22).

21. Method according to any of claims 13-20, **characterized in that** said at least one projection (20) comprises a material having a Rockwell Hardness equal to or greater than 100HRB, such as cemented carbide, steel or any other material harder than HRB.

22. Method according to claim 20, **characterized in that** said contact surface (24) of the bracket (22) comprises a material having a Rockwell Hardness (HRB) less than 100HRB, such aluminium, magnesium, an annealed copper alloy, brass or plastic.

23. Method according to any of claims 13-22, **characterized in that** the method comprises the step fastening the mounting plate (18) to the bracket (22) by means of a bolt, rivet or threaded screw.

24. Method according to any of claims 13-23, **characterized in that** said first component is a vehicle pillar such as an A-pillar, B-pillar, C-pillar etc and the second component is part of a vehicle body, or vice versa.

25. Vehicle (10), **characterized in that** it comprises a tolerance-absorbing mounting fixture(16) according to any of claims 1 to 12.

## Patentansprüche

1. Toleranzabsorbierende Montagevorrichtung (16) zum Montieren eines ersten Bauteils (12) eines Fahrzeugs (10) an einem zweiten Bauteil (14) eines Fahrzeugs, wobei die Montagevorrichtung (16) umfasst:
- eine Montageplatte (18) mit einer Kontaktfläche, die wenigstens einen Vorsprung (20) umfasst, die zum Anbringen an einem ersten Bauteil (14) ausgebildet ist;
- eine Klammer (22), die eine entsprechende Kontaktfläche (24) umfasst, die zum Anbringen an einem zweiten Bauteil (12) ausgebildet ist, und
- Befestigungsmittel (30) zum Halten der Kontaktfläche (24) der Klammer (22) gegen die Kontaktfläche der Montageplatte (18),
**dadurch gekennzeichnet, dass** der wenigstens eine Vorsprung (20) auf der Kontaktfläche der Montageplatte (18) so angeordnet ist, dass er wenigstens teilweise in die Kontaktfläche (24) der Klammer (22) eingebettet wird.

2. Toleranzabsorbierende Montagevorrichtung (16) nach Anspruch 1, **dadurch gekennzeichnet, dass** der wenigstens eine Vorsprung (20) der Kontaktfläche auf der Montageplatte (18) so angeordnet ist, dass er wenigstens teilweise in die Kontaktfläche (24) der Klammer (22) eingebettet wird, wenn die Montageplatte (18) und die Klammer (22) zusammengebracht werden und/oder die Montageplatte (18) und die Klammer (22) aneinander befestigt werden.

3. Toleranzabsorbierende Montagevorrichtung (16) nach einem der Ansprüche 1 oder 2, **dadurch gekennzeichnet, dass** die Kontaktfläche (24) der Klammer (22) im Wesentlichen flach ist.

4. Toleranzabsorbierende Montagevorrichtung (16) nach einem der vorhergehenden Ansprüche, **dadurch gekennzeichnet, dass** die Kontaktfläche der Montageplatte (18) eine Mehrzahl von gleichmäßig oder ungleichmäßig zueinander beabstandeten Vorsprüngen (20) aufweist.

5. Toleranzabsorbierende Montagevorrichtung (16) nach einem der vorhergehenden Ansprüche, **dadurch gekennzeichnet, dass** die Länge des wenigstens einen Vorsprungs (20) bis zu 15 5 mm beträgt, und vorzugsweise im Bereich von 1 bis 10 mm liegt.

6. Toleranzabsorbierende Montagevorrichtung (16) nach einem der vorhergehenden Ansprüche, **dadurch gekennzeichnet, dass** die Klammer (22) wenigstens einen Hohlraum (26) umfasst, der so ausgelegt ist, dass er ein Führungselement (28) auf der Montageplatte (18) aufnimmt.

7. Toleranzabsorbierende Montagevorrichtung (16) nach einem der vorhergehenden Ansprüche, **dadurch gekennzeichnet, dass** die Montageplatte (18) wenigstens einen Hohlraum (26) umfasst, der so angeordnet ist, dass er ein Führungselement (28) auf der Klammer (22) aufnimmt.

8. Toleranzabsorbierende Montagevorrichtung (16) nach einem der vorhergehenden Ansprüche, **dadurch gekennzeichnet, dass** der wenigstens eine Vorsprung (20) ein Material umfasst, das eine Rockwell-Härte hat, die größer ist als die des Materials, das in der Kontaktfläche (24) der Klammer (22) enthalten ist.

9. Toleranzabsorbierende Montagevorrichtung (16) nach einem der vorhergehenden Ansprüche, **dadurch gekennzeichnet, dass** der wenigstens eine Vorsprung (20) ein Material aufweist, das eine Rockwell-Härte hat, die größer oder gleich 100 HRB ist, etwa Hartmetall, Stahl oder jegliches andere Material mit einer Härte von mehr als 100 HRB.

10. Toleranzabsorbierende Montagevorrichtung (16) nach Anspruch 8, **dadurch gekennzeichnet, dass** die Kontaktfläche (24) der Klammer (22) ein Material umfasst, dass eine Rockwell-B-Härte von weniger als 100 HRB aufweist, etwa Aluminium, Magnesium, eine getemperte Kupferlegierung, Messing oder Kunststoff.

11. Toleranzabsorbierende Montagevorrichtung (16) nach einem der vorhergehenden Ansprüche, **dadurch gekennzeichnet, dass** das Befestigungsmittel (30) einen Bolzen, einen Niet oder eine Schraube mit Gewinde beinhaltet.

12. Toleranzabsorbierende Montagevorrichtung (16) nach einem der vorhergehenden Ansprüche, **dadurch gekennzeichnet, dass** das erste Bauteil eine Fahrzeugsäule, etwa eine A-Säule, B-Säule, C-Säule etc. und das zweite Bauteil ein Teil einer Fahrzeugkarosserie ist oder umgekehrt.

13. Verfahren zum Montieren eines ersten Bauteils (14) eines Fahrzeugs an einem zweiten Bauteil (12) eines Fahrzeugs, **dadurch gekennzeichnet, dass** es folgende Schritte umfasst:
- Befestigen einer Montagplatte (18) mit einer Kontaktfläche, die wenigstens einen Vorsprung (20) aufweist, an einem ersten Bauteil (14) eines Fahrzeugs,
- Befestigen einer Klammer (22) mit einer entsprechenden Kontaktfläche (24) an einem zweiten Bauteil (12) eines Fahrzeugs,
- Bringen der Kontaktfläche der Montageplatte (18) und der Kontaktfläche (24) der Klammer (22) in Kontakt miteinander, und
- Befestigen der Montageplatte (18) an der Klammer (22),
wodurch der wenigstens eine Vorsprung (20) der Kontaktfläche der Montageplatte (18) wenigstens teilweise in die Kontaktfläche (24) der Klammer (22) eingebettet wird.

14. Verfahren nach Anspruch 13, **dadurch gekennzeichnet, dass** es den Schritt umfasst, die Montageplatte (18) und die Klammer (22) zusammenzuschieben, so dass der wenigstens eine Vorsprung (20) der Kontaktfläche der Montageplatte (18) wenigstens teilweise in die Kontaktfläche (24) der Klammer (22) eingebettet wird.

15. Verfahren nach einem der Ansprüche 13 oder 14, **dadurch gekennzeichnet, dass** die Kontaktfläche (24) der Klammer (22) im Wesentlichen flach ist.

16. Verfahren nach einem der Ansprüche 13 bis 15, **dadurch gekennzeichnet, dass** die Kontaktfläche der Montageplatte (18) eine Mehrzahl von gleichmäßig oder ungleichmäßig zueinander beabstandeten Vorsprüngen (20) aufweist.

17. Verfahren nach einem der Ansprüche 13 bis 16, **dadurch gekennzeichnet, dass** die Länge des wenigstens einen Vorsprungs (20) bis zu 15 mm beträgt, und vorzugsweise im Bereich von 1 bis 10 mm liegt

18. Verfahren nach einem der Ansprüche 13 bis 17, **dadurch gekennzeichnet, dass** die Klammer (22) wenigstens einen Hohlraum (26) umfasst, der so ausgelegt ist, dass er ein Führungselement (28) auf der Montageplatte (18) aufnimmt, wobei das Verfahren den Schritt umfasst, das Führungselement (28) auf der Montageplatte (18) zu dem Hohlraum (26) in der Klammer (22) auszurichten.

19. Verfahren nach einem der Ansprüche 13 bis 18, **dadurch gekennzeichnet, dass** die Montageplatte (18) einen Hohlraum (26) umfasst, der so ausgelegt ist, dass er ein Führungselement (28) auf der Klammer (22) aufnimmt, wobei das Verfahren den Schritt umfasst, das Führungselement (28) auf der Klammer (22) zu dem Hohlraum (26) in der Montageplatte (18) auszurichten.

20. Verfahren nach einem der Ansprüche 13 bis 19, **dadurch gekennzeichnet, dass** der wenigstens eine Vorsprung (20) ein Material umfasst, das eine Rockwell-Härte hat, die größer ist als die des Materials, das in der Kontaktfläche (24) der Klammer (22) enthalten ist.

21. Verfahren nach einem der Ansprüche 13 bis 20, **dadurch gekennzeichnet, dass** der wenigstens eine Vorsprung (20) ein Material aufweist, das eine Rockwell-Härte hat, die größer oder gleich 100 HRB ist, etwa Hartmetall, Stahl oder jegliches andere Material mit einer Härte von mehr als 100 HRB.

22. Verfahren nach Anspruch 20, **dadurch gekennzeichnet, dass** die Kontaktfläche (24) der Klammer (22) ein Material umfasst, dass eine Rockwell-Härte (HRB) von weniger als 100 HRB aufweist, etwa Aluminium, Magnesium, eine getemperte Kupferlegierung, Messing oder Kunststoff.

23. Verfahren nach einem der Ansprüche 13 bis 22, **dadurch gekennzeichnet, dass** das Verfahren den Schritt umfasst, die Montageplatte (18) mittels einer Bolzens, eines Niets oder einer Schraube mit Gewinde an der Klammer (22) zu befestigen.

24. Verfahren nach einem der Ansprüche 13 bis 23, **dadurch gekennzeichnet, dass** das erste Bauteil eine Fahrzeugsäule, etwa eine A-Säule, B-Säule, C-Säule etc. und das zweite Bauteil ein Teil einer Fahrzeugkarosserie ist oder umgekehrt.

25. Fahrzeug (10), **dadurch gekennzeichnet, dass** es eine toleranzabsorbierende Montagevorrichtung (16) nach einem der Ansprüche 1 bis 12 umfasst.

## Revendications

1. Dispositif de montage (16) absorbant les tolérances, destiné au montage d'un premier composant (12) d'un véhicule (10) sur un deuxième composant (14) d'un véhicule, dans lequel le dispositif de montage (16) comprend
- une plaque de montage (18) ayant une surface de contact comprenant au moins une saillie (20), qui est prévue pour être fixée à un premier composant (14) ;
- une console (22) comprenant une surface de contact correspondante (24) qui est prévue pour être fixée à un deuxième composant (12), et
- des moyens d'attache (30) pour maintenir la surface de contact (24) de la console (22) contre la surface de contact de la plaque de montage (18),
***caractérisé en ce que*** ladite au moins une saillie (20) de la surface de contact de la plaque de montage (18) est prévue pour se retrouver encastrée, au moins partiellement, dans la surface de contact (24) de la console (22).

2. Dispositif de montage (16) absorbant les tolérances selon la revendication 1, ***caractérisé en ce que*** ladite au moins une saillie (20) de la surface de contact de la plaque de montage (18) est prévue pour se retrouver encastrée, au moins partiellement, dans la surface de contact (24) de la console (22) lorsque la plaque de montage (18) et la console (22) sont réunies et/ou lorsque la plaque de montage (18) et la console (22) sont fixées l'une à l'autre.

3. Dispositif de montage (16) absorbant les tolérances selon la revendication 1 ou 2, ***caractérisé en ce que*** la surface de contact (24) de la console (22) est essentiellement plate.

4. Dispositif de montage (16) absorbant les tolérances selon l'une quelconque des revendications précédentes, ***caractérisé en ce que*** la surface de contact de la plaque de montage (18) comprend une pluralité de saillies (20) régulièrement ou irrégulièrement espacées.

5. Dispositif de montage (16) absorbant les tolérances selon l'une quelconque des revendications précédentes, ***caractérisé en ce que*** la longueur de ladite au moins une saillie (20) peut aller jusqu'à 15 mm, et est de préférence comprise dans une plage de 1 à 10 mm.

6. Dispositif de montage (16) absorbant les tolérances selon l'une quelconque des revendications précédentes, ***caractérisé en ce que*** la console (22) comprend au moins une cavité (26) qui est prévue pour recevoir un élément de guidage (28) présent sur la plaque de montage (18).

7. Dispositif de montage (16) absorbant les tolérances selon l'une quelconque des revendications précédentes, ***caractérisé en ce que*** la plaque de montage (18) comprend au moins une cavité qui est prévue pour recevoir un élément de guidage présent sur la console (22).

8. Dispositif de montage (16) absorbant les tolérances selon l'une quelconque des revendications précédentes, ***caractérisé en ce que*** ladite au moins une saillie (20) comprend un matériau ayant une dureté Rockwell supérieure à celle du matériau composant la surface de contact (24) de la console (22).

9. Dispositif de montage (16) absorbant les tolérances selon l'une quelconque des revendications précédentes, ***caractérisé en ce que*** ladite au moins une saillie (20) comprend un matériau ayant une dureté Rockwell égale ou supérieure à 100 HRB, tel que carbure cémenté, acier ou tout autre matériau de dureté supérieure à 100 HRB.

10. Dispositif de montage (16) absorbant les tolérances selon la revendication 8, ***caractérisé en ce que*** ladite surface de contact (24) de la console (22) comprend un matériau ayant une dureté Rockwell B inférieure à 100 HRB, tel que de l'aluminium, du magnésium, un alliage de cuivre recuit, du laiton ou une matière plastique.

11. Dispositif de montage (16) absorbant les tolérances selon l'une quelconque des revendications précédentes, ***caractérisé en ce que*** lesdits moyens d'attache (30) comprennent un boulon, un rivet ou une vis filetée.

12. Dispositif de montage (16) absorbant les tolérances selon l'une quelconque des revendications précédentes, ***caractérisé en ce que*** ledit premier composant est un pied de véhicule tel qu'un pied avant, un pied milieu, un pied arrière, etc., et le deuxième composant fait partie d'une carrosserie de véhicule, ou vice-versa.

13. Procédé de montage d'un premier composant (14) d'un véhicule sur un deuxième composant (12) d'un véhicule, ***caractérisé en ce qu** '*il comprend les étapes consistant à :
- fixer une plaque de montage (18) ayant une surface de contact comprenant au moins une saillie (20) à un premier composant (14) d'un véhicule,
- fixer une console (22) comprenant une surface de contact correspondante (24) à un deuxième composant (12) d'un véhicule,
- réunir la surface de contact de la plaque de montage (18) et la surface de contact (24) de la console (22), et
- assujettir la plaque de montage (18) à la console (22),
ladite au moins une saillie (20) de la surface de contact de la plaque de montage (18) se retrouvant ainsi encastrée au moins partiellement dans la surface de contact (24) de la console (22).

14. Procédé selon la revendication 13, ***caractérisé en ce qu'***il comprend l'étape consistant à presser ensemble la plaque de montage (18) et la console (22) de façon que ladite au moins une saillie (20) de la surface de contact de la plaque de montage (18) se retrouve encastrée au moins partiellement dans la surface de contact (24) de la console (22).

15. Procédé selon la revendication 13 ou 14, ***caractérisé en ce que*** la surface de contact (24) est essentiellement plate.

16. Procédé selon l'une quelconque des revendications 13 à 15, ***caractérisé en ce que*** ladite surface de contact de la plaque de montage (18) comprend une pluralité de saillies (20) régulièrement ou irrégulièrement espacées.

17. Procédé selon l'une quelconque des revendications 13 à 16, ***caractérisé en ce que*** la longueur de ladite au moins une saillie (20) peut aller jusqu'à 15 mm, et est de préférence comprise dans une plage de 1 à 10 mm.

18. Procédé selon l'une quelconque des revendications 13 à 17, ***caractérisé en ce que*** ladite console (22) comprend au moins une cavité (26) qui est prévue pour recevoir un élément de guidage (28) présent sur la plaque de montage (18), le procédé comprenant l'étape consistant à aligner l'élément de guidage (28) sur la plaque de montage (18) avec la cavité (26) sur la console (22).

19. Procédé selon l'une quelconque des revendications 13 à 18, ***caractérisé en ce que*** la plaque de montage (18) comprend une cavité qui est prévue pour recevoir un élément de guidage présent sur la console (22), le procédé comprenant l'étape consistant à aligner ledit élément de guidage sur la console (22) avec ladite cavité sur la plaque de montage (18).

20. Procédé selon l'une quelconque des revendications 13 à 19, ***caractérisé en ce que*** ladite au moins une saillie (20) comprend un matériau ayant une dureté Rockwell supérieure à celle du matériau composant la surface de contact (24) de la console (22).

21. Procédé selon l'une quelconque des revendications 13 à 20, ***caractérisé en ce que*** ladite au moins une saillie (20) comprend un matériau ayant une dureté Rockwell égale ou supérieure à 100 HRB, tel que carbure cémenté, acier ou tout autre matériau de dureté supérieure à 100 HRB.

22. Procédé selon la revendication 20, ***caractérisé en ce que*** ladite surface de contact (24) de la console (22) comprend un matériau ayant une dureté Rockwell (HRB) inférieure à 100 HRB, tel que de l'aluminium, du magnésium, un alliage de cuivre recuit, du laiton ou une matière plastique.

23. Procédé selon l'une quelconque des revendications 13 à 22, ***caractérise en ce que*** le procédé comprend l'étape d'assujettissement de la plaque de montage (18) à la console (22) au moyen d'un boulon, d'un rivet ou d'une vis filetée.

24. Procédé selon l'une quelconque des revendications 13 à 22, ***caractérisé en ce que*** ledit premier composant est un pied de véhicule tel qu'un pied avant, un pied milieu, un pied arrière, etc., et le deuxième composant fait partie d'une carrosserie de véhicule, ou vice-versa.

25. Véhicule (10), ***caractérisé en ce qu'**il* comprend un dispositif de montage (16) absorbant les tolérances selon l'une quelconque des revendications 1 à 12.
